# EUROPÄISCHE PATENTANMELDUNG

(11) **EP 0 914 927 A2**
(43) Veröffentlichungstag der Anmeldung: **12.05.1999**
(21) Anmeldenummer: 98118293.4
(22) Anmeldetag: 28.09.1998
(51) Int. Cl.: B29C 47/68

(54) **Fluidfiltervorrichtung**

(30) Priorität: 01.10.1997 DE 19743403
(71) Anmelder: WIL-MAN POLYMER-FILTRATION GmbH, 48493 Wettringen (DE)
(72) Erfinder: Hangmann, Manfred, 48268 Greven (DE)
(74) Vertreter: Lau-Loskill, Philipp, Dipl.-Phys.

(57) **Zusammenfassung**

Es wird eine Fluidfiltervorrichtung mit einer Siebplatte zur Halterung und/oder Abstützung von mindestens einem Filter beschrieben. Hierbei weist die Siebplatte eine Vielzahl von Durchtrittsöffnungen auf, die sich von der Frontseite der Siebplatte zu der Rückseite derselben erstrecken. Die Siebplatte ist in einer Bohrung eines Bolzens, der fluiddicht in einem Gehäuse der Fluidfiltervorrichtung vorgesehen ist, angeordnet, wobei sich die Bohrung radial durch den Bolzen unter Ausbildung einer Fluidverbindung zwischen einem Fluidzufuhrkanal und einem Fluidabfuhrkanal erstreckt. Der Bolzen ist relativ zur Strömungsrichtung des Fluids im Fluidzufuhrkanal bzw. Fluidabfuhrkanal axial verschiebbar, derart, daß in einer ersten Stellung des Bolzens der Fluidzufuhrkanal mit dem Fluidabfuhrkanal über die mit beiden Kanälen fluchtende Bohrung verbunden ist, während in der zweiten Stellung des Bolzens die Bohrung nicht mit den beiden Kanälen fluchtet und somit kein Fluid vom Fluidzufuhrkanal zum Fluidabfuhrkanal fließt. Die Siebplatte (5) und das mindestens eine, an der Siebplatte (5) anliegende und hiervon gehalterte und abgestützte Filter (12) sind relativ zur Strömungsrichtung (6) des Fluids in der Bohrung (4 a, 4 b) gesehen geneigt ausgebildet.

## Beschreibung

Die vorliegende Erfindung betrifft eine Fluidfiltervorrichtung mit den Merkmalen des Oberbegriffs des Patentanspruchs 1.

Fluidfiltervorrichtungen, die zur Filtration von Flüssigkeiten, insbesondere polymeren Schmelzen, verwendet werden, weisen ein mehr oder weniger komplex aufgebautes Kanalsystem sowie Ventile auf, wobei in dem Kanalsystem dann mindestens ein Filter angeordnet ist, um die unerwünschten Schmutzpartikel aus dem Fluid und insbesondere aus der polymeren Schmelze vor deren Verarbeitung zu entfernen.

So beschreibt beispielsweise die DE-AS 15 54 913 eine Fluidfiltervorrichtung für Strangpressen und Spritzgußmaschinen der angegebenen Art, wobei in einem Gehäuse ein axial verschiebbarer und mit einer Bohrung versehener Bolzen angeordnet ist. Bedingt durch eine axiale Verschiebung des Bolzens relativ zum Gehäuse ist die Bohrung im Bolzen, die sich radial über dessen gesamte Materialstärke erstreckt, in einer ersten Stellung derart auf einen Fluidzufuhrkanal und auf einen Fluidabfuhrkanal ausrichtbar, so daß durch diese Bohrung in dem axial verschiebbaren Bolzen die Verbindung zwischen dem Fluidzufuhrkanal und dem Fluidabfuhrkanal hergestellt ist. In der zylindrischen Bohrung ist senkrecht zur Strömungsrichtung des Fluids ein Filter angeordnet, um so die unerwünschten Schmutzpartikel aus dem Fluid auszufiltrieren. Durch eine axiale Verschiebung des Bolzens in eine zweite Stellung wird die Bohrung aus der Flucht mit dem Fluidzufuhrkanal und dem Fluidabfuhrkanal gebracht, so daß durch den Bolzen selbst, der zylindrisch ausgestaltet ist, eine Absperrung des Fluidstromes erfolgt. Das in der Bohrung des Bolzens angeordnete Filter ist, wie der Querschnitt der Bohrung, kreisförmig ausgestaltet.

Um bei höheren Fluiddrücken eine unerwünschte Verlagerung des Filters zu verhindern, ist es bei einer weiteren Ausgestaltung der zuvor beschriebenen Fluidfiltervorrichtung bekannt, das Filter über eine Siebplatte zu haltern. Eine derartige Siebplatte ist beispielsweise der Zeichnung der DE 42 18 756 C zu entnehmen, wobei während des Filtrierens in Strömungsrichtung des zu filtrierenden Fluids gesehen das Filter gegen diese Siebplatte gedrückt und somit hiervon gehaltert wird. Auch bei diesem Stand der Technik weist die Bohrung im Bolzen einen kreisförmigen Querschnitt auf, wobei sowohl die Siebplatte als auch das Filter senkrecht zur Fluidströmungsrichtung in der Bohrung angeordnet und in der Draufsicht rund ausgebildet sind.

Auch die in der DE 44 45 254 C beschriebene Fluidfiltervorrichtung weist ein in der Draufsicht gesehenes kreisförmiges Filter sowie eine kreisförmige Siebplatte auf, die in der DE 44 45 254 als Lochplatte bezeichnet ist. Zusätzlich wird bei diesem Stand der Technik gemäß der DE 44 45 254 C das Filter durch eine Stützplatte gehaltert, so daß in Strömungsrichtung des zu filtrierenden Fluids gesehen das Fluid zunächst die Stützplatte, hiernach das Filter und anschließend die Lochplatte, die in der vorliegenden Anmeldung als Siebplatte bezeichnet wird, durchströmt. Hierbei ist dieses Filterpaket, bestehend aus Stützplatte, Filter und Lochplatte (Siebplatte) senkrecht zur Strömungsrichtung des Fluids in der Bohrung, die wiederum in einem axialen Bolzen der vorstehend beschriebenen Art angeordnet ist, vorgesehen.

Weiterhin ist es bei Fluidfiltervorrichtungen der vorstehend beschriebenen Art bekannt, in der Draufsicht gesehen oval ausgestaltete Siebplatten und identisch geformte Filter zu verwenden, wobei die DE 295 17 140 U die Siebplatte als Siebträgerplatte bezeichnet. Dementsprechend ist bei der bekannten Fluidfiltervorrichtung gemäß der DE 295 17 140 U die Bohrung im Bolzen, in der die bekannte Siebplatte und das Filter senkrecht zur Fluidströmungsrichtung angeordnet sind, entsprechend oval aufgeweitet. Durch eine derartige ovale Ausgestaltung der bekannten Siebplatte und des Filters soll erreicht werden, daß die zum Filtrieren zur Verfügung stehende Fläche entsprechend vergrößert wird.

Die zuvor beschriebene oval ausgestaltete Siebträgerplatte und das in der Draufsicht ovale Filter des Standes der Technik, die senkrecht zur Fluidströmungsrichtung angeordnet sind, erfordern zumindestens eine ovale Ausgestaltung eines Bohrungsabschnittes, der in Strömungsrichtung des zu filtrierenden Fluids gesehen stromauf der Siebplatte vorhanden ist, wobei ein derartiger oval ausgestalteter Bohrungsabschnitt einen erhöhten Aufwand bei der Herstellung erfordert. Wird ein solcher oval ausgestalteter Bohrungsabschnitt zudem noch in einem axial verschiebbaren Bolzen vorgesehen, wie dies bei der DE 295 17 140 U der Fall ist, verlängert eine derartige ovale Ausgestaltung der Siebplatte und das hieran anliegende Filter im Vergleich zu einer kreisförmig gestalteten Siebplatte und Filter die Baulänge des Bolzens. Da dieser Bolzen jedoch bedingt durch die relativ hohen Fluiddrücke sehr dicht und präzise in der entsprechenden Gehäusebohrung geführt werden muß, um ein unerwünschtes Austreten von Fluid aus der Fluidfiltervorrichtung zu verhindern, entstehen hierbei erhebliche Mehrkosten aufgrund der längeren Bauweise des Bolzens bei der ovalen Ausgestaltung der Siebplatte, so daß diese zusätzlichen Kosten den Erfolg einer oval ausgestalteten und senkrecht zur Strömungsrichtung des Fluids angeordneten Siebplatte und eines Filters sehr in Frage stellen.

Der vorliegenden Erfindung liegt die Aufgabe zugrunde, eine Fluidfiltervorrichtung der angegebenen Art zur Verfügung zu stellen, die im Vergleich zu einer senkrecht zur Fluidströmungsrichtung angeordneten runden Siebplatte mit daran anliegendem Filter eine vergrößerte Fläche aufweist.

Diese Aufgabe wird erfindungsgemäß durch eine Fluidfiltervorrichtung mit den kennzeichnenden Merkmalen des Patentanspruchs 1 gelöst.

Die erfindungsgemäße Fluidfiltervorrichtung mit einer Siebplatte zur Halterung und/oder Abstützung von mindestens einem Filter weist eine solche Siebplatte auf, die eine Vielzahl von Durchtrittsöffnungen besitzt. Hierbei erstrecken sich diese Durchtrittsöffnungen von der Frontseite der Siebplatte zu deren Rückseite. Die Siebplatte ist bei der erfindungsgemäßen Fluidfiltervorrichtung in einer Bohrung eines Bolzens, der fluiddicht in einem Gehäuse der Fluidfiltervorrichtung vorgesehen ist, angeordnet. Diese Bohrung erstreckt sich radial durch die gesamte Materialstärke des Bolzens unter Ausbildung einer Fluidverbindung zwischen einem Fluidzufuhrkanal und einem Fluidabfuhrkanal, wobei der Bolzen relativ zur Strömungsrichtung des Fluids im Fluidzufuhrkanal bzw. Fluidabfuhrkanal gesehen axial verschiebbar ist, derart, daß in einer ersten Stellung des Bolzens der Fluidzufuhrkanal mit dem Fluidabfuhrkanal über die mit beiden Kanälen fluchtende Bohrung verbunden ist. Hingegen fluchtet in einer zweiten Stellung des Bolzens die Bohrung nicht mit den beiden Kanälen (Fluidzufuhrkanal, Fluidabfuhrkanal), so daß dementsprechend kein Fluid vom Fluidzufuhrkanal zum Fluidabfuhrkanal fließt. Um bei der erfindungsgemäßen Fluidfiltervorrichtung eine entsprechende Vergrößerung der zur Verfügung stehenden Filterfläche zu erreichen, ist bei der erfindungsgemäßen Fluidfiltervorrichtung die Siebplatte und das mindestens eine, an der Siebplatte anliegende und hiervon gehalterte und abgestützte Filter relativ zur Strömungsrichtung des Fluids in der Bohrung gesehen geneigt ausgebildet, wobei die Bohrung als solche im Bereich der Siebplatte/des Filters einen kreisförmigen Querschnitt besitzt.

Die erfindungsgemäße Fluidfiltervorrichtung weist eine Reihe von Vorteilen auf. So ist zunächst festzuhalten, daß die erfindungsgemäße Fluidfiltervorrichtung im Vergleich zu den zuvor beschriebenen bekannten Fluidfiltervorrichtungen mit kreisförmiger Siebplatte und Filter und ebenfalls im Vergleich zu der aus der DE 295 17 140 U bekannten Fluidfiltervorrichtung mit ovaler Siebplatte und ovalem Filter, abhängig von der jeweiligen Ausgestaltung der erfindungsgemäßen Fluidfiltervorrichtung, eine zwischen 20 und 100 % größere Fläche zur Verfügung stellt, so daß dementsprechend in der erfindungsgemäßen Fluidfiltervorrichtung zwischen 20 % und 100 % größere Filter gehaltert werden. Dies wiederum führt dazu, daß eine derartige erfindungsgemäße Fluidfiltervorrichtung eine vergrößerte Aufnahmekapazität für abgeschiedene Partikel besitzt, so daß die Benutzungszeit der erfindungsgemäßen Fluidfiltervorrichtung im gleichen Maß verlängert wird, bevor ein Reinigen des Filters erforderlich ist.

Wegen der vergrößerten Aufnahmekapazität der erfindungsgemäßen Fluidfiltervorrichtung für abfiltrierte Partikel verringert sich auch bei der erfindungsgemäßen Fluidfiltervorrichtung im Vergleich zu den zuvor genannten bekannten Fluidfiltervorrichtungen mit runden Siebplatten und runden Filtern der Gegendruck, den die Siebplatte und das hieran anliegende Filter mit zunehmender Beladung des Filters aufbaut, so daß insbesondere bei Anwendung der erfindungsgemäßen Fluidfiltervorrichtung für aufgeschmolzenen Kunststoff unerwünschte Nebeneffekte, wie beispielsweise ein an der Siebplatte und dem Filter stattfindendes Cracken des Kunststoffes, nicht auftreten können. Weiterhin konnte überraschend festgestellt werden, daß durch die geneigte Ausgestaltung der Siebplatte und des Filters relativ zur Fluidströmungsrichtung Strömungstotgebiete im Bereich der Siebplatte und/oder des Filters nicht auftreten, so daß dementsprechend bei der erfindungsgemäßen Fluidfiltervorrichtung das auf der Siebplatte angeordnete Filter über dessen gesamte Abmessung stets gleichmäßig durchströmt wird. Auch ist es bei der erfindungsgemäßen Fluidfiltervorrichtung nicht erforderlich, daß der stromauf oder stromab der Siebplatte und des Filters vorgesehene Bohrungsabschnitt des Strömungskanals, in dem die geneigt positionierte Siebplatte mit hiervon gehaltertem Filter angeordnet ist, speziell ausgeformt, so zum Beispiel oval, ausgeformt wird, so daß bei der erfindungsgemäßen Fluidfiltervorrichtung die Siebplatte und das Filter vorzugsweise in vom Querschnitt her runden Bolzenbohrungen angeordnet werden. Da derartige runde Bohrungen im Bolzen wesentlich einfacher und kostengünstiger im Vergleich zu ovalen Kanälen erstellt werden können, sind die erfindungsgemäßen Filtervorrichtungen ebenso entsprechend preisgünstig herstellbar. Auch erfordert die bei der erfindungsgemäßen Fluidfiltervorrichtung vorgesehene geneigte Siebplatte mit hieran anliegendem Filter keine Verlängerung der axialen Länge des diesbezüglichen Bolzens, wie dies vorstehend für den Stand der Technik gemäß der DE 295 17 140 U beschrieben und erforderlich ist, so daß die erfindungsgemäße Filtervorrichtung auch gegenüber dieser bekannten Fluidfiltervorrichtung preiswerter herstellbar ist.

Als wesentlicher Vorteil der erfindungsgemäßen Fluidfiltervorrichtung ist desweiteren herauszustellen, daß selbst im längeren Gebrauch eine unerwünschte Dimensionsveränderung des Bolzens nicht auftritt. Hier hat sich überraschend gezeigt, daß, obwohl bei der erfindungsgemäßen Fluidfiltervorrichtung aufgrund der geneigten Anordnung der Siebplatte und des hiervon gestützten Filters keine unerwünschten Verformungen des Bolzens, die dann ein Festklemmen desselben zur Folge hätte, oder statische Probleme, die auf die geänderte Positionierung und Lagerung der geneigt angeordneten Siebplatte und des hieran abgestützten Filters zurückzuführen wären, und die letztendlich zu einer Zerstörung der erfindungsgemäßen Fluidfiltervorrichtung führen, auftreten, so daß sich die erfindungsgemäße Fluidfiltervorrichtung auch nach langer Benutzungszeit einwandfrei anwenden läßt.

Bei einer ersten Ausführungsform der erfindungsgemäßen Fluidfiltervorrichtung sind deren Siebplatte und das Filter relativ zur Strömungsrichtung des Fluids in der Bohrung gesehen unter einem Neigungswinkel α zwischen 10° und 80°, vorzugsweise unter einem Neigungswinkel α zwischen 35° und 55, angeordnet. Mit anderen Worten sind somit bei dieser ersten Ausführungsform der erfindungsgemäßen Fluidfiltervorrichtung der Fußbereich der Siebplatte und des Filters zur Strömungsrichtung des Fluids hin geneigt. Werden diese Siebplatte und das Filter in einer Bohrung mit einem kreisförmigen Querschnitt angeordnet, so bewirkt eine derartige Neigung der Siebplatte und des Filters, daß zur Abdeckung des gesamten Bohrungsquerschnitts somit eine ovale Siebplatte mit ovalem Filter zur Verfügung steht, die verglichen mit einer senkrecht im Kanal angeordneten runden Siebplatte eine vergrößerte Siebfläche zur Verfügung stellt. Eine derartige ovale Siebplatte mit ovalem Filter besitzt dann, abhängig vom Neigungswinkel α, im Vergleich zur bekannten runden Siebplatte mit rundem Filter eine um etwa 10 % bis etwa 50 % vergrößerte Fläche.

Bei einer zweiten Ausführungsform der erfindungsgemäßen Fluidfiltervorrichtung sind Siebplatte und Filter relativ zur Strömungsrichtung des Fluids in der Bolzenbohrung gesehen unter einem Neigungswinkel α' zwischen 100° und 170°, vorzugsweise unter einem Neigungswinkel α' zwischen 125° und 145°, angeordnet. Mit anderen Worten ist somit hierbei nicht, wie bei der zuvor beschriebenen ersten Ausführungsform der erfindungsgemäßen Fluidfiltervorrichtung, der Fußbereich der Siebplatte und des Filters zur Strömungsrichtung des Fluids hin geneigt, sondern verläuft in Strömungsrichtung des Fluids, so daß bei einer Anordnung dieser entsprechend geneigten Siebplatte und des geneigten Filters in einem runden Kanal auch hierbei eine ovale Siebplatte mit einem ovalen Filter entsteht, das den Gesamtquerschnitt des Kanals abdeckt. Bezüglich der Vergrößerung der Siebplatte und des Filters gelten bei dieser zweiten Ausführungsform der erfindungsgemäßen Fluidfiltervorrichtung die Werte, wie diese zuvor für die erste Ausführungsform der erfindungsgemäßen Fluidfiltervorrichtung quantifiziert sind.

Eine besonders große Filterfläche weist eine weitere Ausführungsform der Fluidfiltervorrichtung auf, bei der die Siebplatte und das hiervon gestützte Filter als Kugelabschnitt oder als Kugelschicht, vorzugsweise als Halbkugel, ausgebildet sind. Hierbei sind die Mantelflächen des Kugelabschnittes bzw. der Kugelschicht bzw. der Halbkugel mit der Vielzahl der Durchtrittsöffnungen versehen, derart, daß das zu filtrierende Fluid durch diese Durchtrittsöffnungen strömt, wenn die Siebplatte und das hiervon gestützte Filter im Strömungsweg des Fluids angeordnet sind. Insbesondere dann, wenn bei dieser Ausführungsform die Siebplatte und das Filter als Halbkugel ausgebildet sind, wobei die Schnittfläche der Halbkugel senkrecht zur Strömungsrichtung des Fluids in der Bolzenbohrung ausgerichtet ist, läßt sich eine maximale Anlagefläche der Siebplatte für entsprechend geformte Filter erzielen. Wahlweise weist bei dieser Ausführungsform dann insbesondere die Schnittfläche der Halbkugel zur Strömungsrichtung oder entgegengesetzt zur Strömungsrichtung des in der Bolzenbohrung zu filtrierenden Fluids hin, wobei im ersteren Fall das zu filtrierende Fluid in die Halbkugel einströmt, so daß die innere Mantelfläche der Halbkugel mit dem mindestens einen Filter belegt ist. Im zweiten Fall ist die Halbkugelfläche zur Strömungsrichtung des Fluids ausgerichtet, so daß hierbei dann die äußere Mantelfläche der Halbkugel das mindestens eine Filter haltert und stützt.

Eine ebenfalls besonders geeignete und bevorzugte Ausführungsform der erfindungsgemäßen Fluidfiltervorrichtung sieht vor, daß die Siebplatte und das hieran anliegende Filter die Form eines Kegels, eines Kegelschnittes oder eines Kegelstumpfes aufweist, wobei auch bei dieser Ausführungsform die Mantelflächen des Kegels, des Kegelabschnittes oder des Kegelstumpfes mit der Vielzahl der Durchtrittsöffnungen versehen ist. Wie bereits zuvor für die kugelförmige bzw. kugelartige Siebplatte erläutert, kann auch bei dieser Ausführungsform die kegelartige bzw. kegelförmige Siebplatte und das hieran anliegende und entsprechend geformte Filter derart zur Strömungsrichtung des Fluids angeordnet werden, daß die Spitze des Kegels, die Schnittfläche des Kegels oder die Deckfläche des Kegelstumpfes entgegengesetzt zur Strömungsrichtung des zu filtrierenden Fluids weist. Bei dieser Ausführungsform ist somit auf der äußeren Mantelfläche des Kegels, des Kegelschnittes bzw. des Kegelstumpfes dann das mindestens eine Filter angeordnet und wird von dieser äußeren Mantelfläche gehaltert, so daß hierbei der Kegel, der Kegelschnitt bzw. der Kegelstumpf während des Filtrierens von außen nach innen von dem in der Bolzenbohrung zu filtrierenden Fluid durchströmt wird.

Insbesondere dann, wenn sich die Durchtrittsöffnungen über die gesamte Mantelfläche des Kegels, des Kegelschnittes oder des Kegelstumpfes erstrecken und somit die gesamte Mantelfläche einer derartig geformten Siebplatte zur Abstützung von entsprechend hieran in ihrer Form angepaßte Filter verwendet werden kann, besitzt eine derartige Ausführungsform der erfindungsgemäßen Fluidfiltervorrichtung eine lange Standzeit zwischen zwei erforderlichen Regenerierungen, um so durch die Regenerierung die abgeschiedenen Partikel von der Filteroberfläche zu entfernen.

Sind bei den zuvor beschriebenen Ausführungsformen der erfindungsgemäßen Fluidfiltervorrichtung die Siebplatte und das Filter als Kegelschnitt oder Kegelstumpf ausgebildet, so sieht eine Weiterbildung vor, daß hierbei die Schnittfläche des Kegels oder die Deckfläche des Kegelstumpfes zusätzlich mit Durchtrittsöffnungen versehen ist, so daß im Bereich der Schnittfläche des Kegels bzw. der Deckfläche des Kegelstumpfes ebenfalls mindestens ein Filter anliegen kann und dementsprechend hier auch keine Strömungstotzonen auftreten können.

Bezüglich der Ausrichtung der als Kegel, als Kegelschnitt oder als Kegelstumpf ausgebildeten Siebplatte und des sich hieran abstützenden Filter relativ zur Strömungsrichtung des Fluids in der Bolzenbohrung ist festzuhalten, daß die Seitenlinie einer derartigen kegelförmigen, kegelschnittartigen oder kegelstumpfartigen Siebplatte relativ zur Strömungsrichtung des Fluids gesehen unter einem Winkel α'' zwischen 100° und 170°, vorzugsweise unter einem Winkel α'' zwischen 120° und 150°, angeordnet ist. Mit anderen Worten weist somit bei dieser Ausführungsform die Spitze des Kegels, die Schnittfläche des Kegels oder die Deckfläche des Kegelstumpfes entgegengesetzt zur Strömungsrichtung des zu filtrierenden Fluids, wobei abhängig von der jeweils zur Verfügung stehenden axialen Länge der Bolzenbohrung, in der die Siebplatte mit dem Filter angeordnet werden soll, der Neigungswinkel der Seitenlinie variiert wird. Bei einer relativ großen axialen Länge der Bolzenbohrung wird ein solcher Kegel, Kegelstumpf bzw. Kegelschnitt ausgewählt, bei dem die Seitenlinie unter einem Winkel α'' insbesondere zwischen 145° und 170°, relativ zur Strömungsrichtung des Fluids in der Bolzenbohrung angeordnet ist, während bei solchen Bohrungen, die eine relativ kurze axiale Länge aufweisen, hier vorzugsweise ein Kegel, Kegelschnitt oder Kegelstumpf ausgewählt wird, dessen Seitenlinie unter einem Winkel α'' zwischen etwa 120° und 145°, relativ zur Strömungsrichtung des zu filtrierenden Fluids gesehen, variiert.

Die zuvor beschriebenen kegelartigen, kegelstumpfartigen bzw. kegelschnittartigen Siebplatten und identisch geformte Filter werden, wie bereits erwähnt, insbesondere so ausgerichtet, daß das zu filtrierende Fluid diese Siebplatten und Filter von der äußeren Mantelfläche des Kegels, Kegelschnittes bzw. Kegelstumpfes nach innen hin durch die Durchtrittsöffnungen durchströmt. Mit anderen Worten liegt hierbei das mindestens eine Filter auf der äußeren Mantelfläche des Kegels, Kegelschnittes oder Kegelstumpfes auf und wird von dieser äußeren Mantelfläche auch entsprechend gehaltert und abgestützt. Vorzugsweise ist bei diesen Ausführungsformen der erfindungsgemäßen Fluidfiltervorrichtung dann noch die Siebplattengrundfläche nicht als Siebplatte ausgebildet, sondern weist stattdessen eine Bohrung, die sich nahezu über die gesamte Grundfläche des Kegels, des Kegelschnittes oder des Kegelstumpfes erstreckt, auf. In besonderen Fällen, bei denen mit extremen Drücken des zu filtrierenden Fluids gerechnet werden muß, können sich über die Fläche der Grundfläche gesehen entsprechende Aussteifungsstege erstrecken, wodurch die zuvor angesprochene Bohrung dann auf eine entsprechende Anzahl von Teilbohrungen aufgeteilt wird.

Bei einer anderen Ausführungsform der erfindungsgemäßen Fluidfiltervorrichtung sind die Siebplatte und das hiervon abgestützte Filter ebenfalls als Kegel, Kegelschnitt oder Kegelstumpf ausgebildet, wobei hier jedoch im Unterschied zu der zuvor beschriebenen Ausführungsform der erfindungsgemäßen Fluidfiltervorrichtung die Grundfläche des Kegels, Kegelschnittes bzw. Kegelstumpfes ebenfalls als Siebplatte zur Abstützung eines entsprechend geformten Filters ausgestaltet ist. Hierbei weist die Grundfläche ebenfalls eine Vielzahl von weiteren Durchtrittsöffnungen auf, so daß somit nicht nur die Mantelfläche des Kegels, Kegelschnittes oder Kegelstumpfes sondern auch die Grundfläche des Kegels, Kegelschnittes oder Kegelstumpfes als Anlagefläche und Halterungsfläche für mindestens ein Filter dienen. Die Grundfläche ist dabei vorzugsweise so ausgerichtet, daß sie senkrecht zur Strömungsrichtung des zu filtrierenden Fluids steht, wobei sich in Strömungsrichtung des zu filtrierenden Fluids gesehen an die Grundfläche dann der kegelförmige, kegelschnittförmige oder kegelstumpfförmige Abschnitt der Siebplatte oder eine entsprechend geformte zweite Siebplatte anschließt. Mit anderen Worten durchströmt somit das jeweils zu filtrierende Fluid zunächst die in der Grundfläche vorgesehene Vielzahl der weiteren Durchtrittsöffnungen und gelangt somit ins Innere des Kegels, Kegelschnittes oder Kegelstumpfes, so daß von dort aus über die in der Mantelfläche vorgesehenen Durchtrittsöffnungen das Fluid dann nach außen gelangt. Diese Ausführungsform ermöglicht ein zweistufiges Filtrieren des jeweils zu filtrierenden Fluids, wobei die erste Filtrationsstufe durch das mindestens eine, an der Grundfläche anliegende erste Filter und die zweite Filtrationsstufe durch das innen an der Mantelfläche des Kegels, Kegelschnittes oder Kegelstumpfes anliegende mindestens zweite Filter herbeigeführt wird.

Eine Weiterbildung der zuvor beschriebenen Siebplatte sieht vor, daß die Grundfläche des Kegels, des Kegelschnittes oder des Kegelstumpfes eine Vielzahl von weiteren Durchtrittsöffnungen aufweist, wobei der Durchmesser der weiteren Durchtrittsöffnungen größer ist als der Durchmesser der in den Mantelflächen vorgesehenen Durchtrittsöffnungen. Hierdurch kann insbesondere durch die Grundfläche des Kegels, des Kegelschnittes oder des Kegelstumpfes mindestens ein, relativ grobmaschiges erstes Filter gehaltert werden, während an der Mantelfläche des Kegels, des Kegelschnittes oder des Kegelstumpfes mindestens ein, relativ zum ersten Filter feineres zweites Filter anliegt. Dies führt dazu, daß an der Grundfläche des Kegels, des Kegelschnittes oder des Kegelstumpfes im ersten Filtrationsprozeß Grobpartikel aus dem durch die Bolzenbohrung strömendes Fluid abgeschieden werden, während an der Mantelfläche dann die Abtrennung von wesentlich feineren Partikeln aus dem Fluid erfolgt.

Besonders geeignet ist es, wenn die erfindungsgemäße Fluidfiltervorrichtung eine Siebplatte mit solchen Durchtrittsöffnungen aufweist, bei der die Summe der Grundflächen aller Durchtrittsöffnungen, d.h. die Gesamtdurchtrittsfläche, 50 % bis 80 % der Gesamtfläche der Siebplatte ausmacht. Hierdurch wird erreicht, daß eine derartige Siebplatte selbst nur einen relativ geringen Gegendruck hervorruft, wobei desweiteren ein Ausbilden von Strömungstotzonen wirksam verhindert wird.

Bei einer besonders geeigneten Ausführungsform der erfindungsgemäßen Fluidfiltervorrichtung besitzt die Siebplatte eine kegelstumpfartige Form, wobei die Fläche des Deckkreises und/oder die Mantelfläche mit einer Vielzahl von im Wesentlichen in Strömungsrichtung verlaufenden Durchtrittsöffnungen versehen ist. Mit anderen Worten wird bei einer derartigen Siebplatte das zu filtrierende Fluid im Wesentlichen durch die Siebplatte selbst nicht umgelenkt, so daß hierbei besonders wirksam Strömungstotzonen und unerwünschte Verwirbelungen in der Bolzenbohrung und insbesondere auch im Bereich der mit dem Filter belegten Siebplatte verhindert werden.

Selbstverständlich ist es auch möglich, die Mantelfläche des Kegelstumpfes, des Kegelschnittes oder des Kegels mit einer Vielzahl von Durchtrittsöffnungen zu versehen, wobei bei dieser Ausführungsform die Durchtrittsöffnungen im Wesentlichen senkrecht zur Mantelfläche ausgerichtet sind.

Die Ausgestaltung der in dem Bolzen angeordneten Bohrung bei der erfindungsgemäßen Fluidfiltervorrichtung richtet sich zunächst danach, welche Siebplatte und welches hiervon gestützte Filter in dieser Bohrung angeordnet wird. Hierbei ist dann darauf zu achten, daß einerseits im Bereich der Bohrung noch genügend Material stehenbleibt, so daß die entsprechenden Kräfte, die insbesondere auch bei hohen Fluiddrücken nicht unerheblich sind, ohne eine unerwünschte Verformung von dem Bolzen aufgefangen werden können. Desweiteren muß, allgemein gesprochen, die Bohrung so ausgestaltet sein, daß Strömungstotzonen vermieden werden.

Eine besonders geeignete Ausführungsform der erfindungsgemäßen Fluidfiltervorrichtung sieht vor, daß in Fluidströmungsrichtung gesehen die im Bolzen angeordnete Bohrung einen ersten Bohrungsabschnitt und einen sich hieran anschließenden zweiten Bohrungsabschnitt aufweist, wobei der erste Bohrungsabschnitt einen größeren Durchmesser besitzt als der zweite Bohrungsabschnitt. Mit anderen Worten wird bei dieser bevorzugten Ausgestaltung der Bohrung in der erfindungsgemäßen Fluidfiltervorrichtung eine Schulter aufgrund der unterschiedlichen Durchmesser der beiden Bohrungsabschnitte zwangsweise ausgebildet, wobei sich an dieser Schulter dann die Siebplatte abstützt.

Insbesondere ist bei der zuvor beschriebenen Ausführungsform der erfindungsgemäßen Fluidfiltervorrichtung die Bohrung insgesamt als zylindrische Bohrung ausgestaltet, wobei eine besonders vorteilhafte Weiterbildung vorsieht, daß der zweite Bohrungsabschnitt in Fluidströmungsrichtung gesehen zunächst einen trichterförmigen Bohrungsabschnitt und hieran anschließend einen zylindrischen Bohrungsabschnitt aufweist. Vorzugsweise dient dann der trichterförmige Bohrungsabschnitt zur Aufnahme der Siebplatte.

Bei einer anderen Ausführungsform der erfindungsgemäßen Fluidfiltervorrichtung ist der zylindrische Bohrungsabschnitt, der sich in Fluidströmungsrichtung gesehen an den zuvor beschriebenen trichterförmigen Bohrungsabschnitt anschließt, in seinem Durchmesser an den Durchmesser des Fluidabfuhrkanals angepaßt, wobei vorzugsweise der zylindrische Bohrungsabschnitt den selben Durchmesser aufweist wie der Fluidabfuhrkanal.

Bei einer weiteren Ausgestaltung der zuvor beschriebenen erfindungsgemäßen Fluidfiltervorrichtung, die stromab des Filters zunächst einen trichterförmigen Bohrungsabschnitt und hieran anschließend einen zylindrischen Bohrungsabschnitt aufweist, ist der Fluidabfuhrkanal im Verbindungsbereich mit dem zylindrischen Bohrungsabschnitt trichterförmig aufgeweitet, wobei diese Ausgestaltung immer dann bevorzugt verwendet wird, wenn die erfindungsgemäße Fluidfiltervorrichtung zwei Bolzen und dementsprechend auch zwei Bohrungen mit zwei darin angeordneten Siebplatten und mindestens zwei Filtern aufweist, so daß der über den Fluidzufuhrkanal zugeführte Fluidstrom dann aufgeteilt und nach Filtrierung wieder zusammengeführt wird, wie dies nachfolgend noch bei einer konkreten Ausführungsform in Verbindung mit der Zeichnung erläutert ist.

Bei einer anderen Ausführungsform der erfindungsgemäßen Fluidfiltervorrichtung ist der Siebplatte eine Stützplatte zugeordnet, wobei die Stützplatte in ihrer Form der Siebplatte angepaßt ist und eine Vielzahl von Durchtrittskanälen aufweist, wobei zwischen der Siebplatte und der Stützplatte das mindestens eine Filter anordbar ist. Hierbei bewirkt die Siebplatte, daß das mindestens eine Filter in einer ersten Strömungsrichtung des Fluids gehaltert wird, während die Stützplatte das mindestens eine Filter in einer zweiten Strömungsrichtung des Fluids haltert, wobei die zweite Strömungsrichtung des Fluids zur ersten Strömungsrichtung des Fluids entgegengesetzt ist. Diese Ausführungsform der erfindungsgemäßen Fluidfiltervorrichtung findet insbesondere immer dann Anwendung, wenn die erfindungsgemäße Fluidfiltervorrichtung derart ausgestaltet ist, daß sie zur Reinigung des mindestens einen Filters rückspülbar ist. Während des Rückspülvorganges wird dabei ein Teilstrom des bereits filtrierten Fluids umgekehrt und durchströmt die Anordnung, bestehend aus der Siebplatte, dem mindestens einen Filter und der Stützplatte, in einer zur Filtrierung entgegengesetzten Strömungsrichtung, so daß die ursprünglich beim Filtrieren auf dem mindestens einen Filter abgeschiedenen Partikel abgespült und aus der Fluidfiltervorrichtung entfernt werden können. Ein derartiges Rückspülen ist in der DE 44 45 254 C2 beschrieben, so daß der Inhalt dieser Patentschrift zum Bestandteil der Offenbarung der vorliegenden Anmeldung wird.

Ein besonders intensives Rückspülen und somit Regenerieren des mit Schmutzpartikel beladenen mindestens einen Filters wird dadurch erreicht, daß bei der erfindungsgemäßen Fluidfiltervorrichtung die Durchtrittskanäle in der Stützplatte mit den Durchtrittsöffnungen in der Siebplatte fluchten. Hierdurch wird besonders wirksam sowohl während des Filtrierens als auch während des Rückspülens (Regenerieren) die Ausbildung von Strömungstotzonen oder eine unerwünschte Kanalbildung vermieden, wobei zusätzlich hierzu als weiterer Vorteil anzusehen ist, daß der Gegendruck einer derartigen Anordnung, bestehend aus Siebplatte, dem mindestens einen Filter und der Stützplatte, entsprechend gering ist.

Bei einer besonders geeigneten und für den Dauereinsatz gedachten Ausführungsform der erfindungsgemäßen Fluidfiltervorrichtung weist diese einen solchen Bolzen auf, bei dem die Innenwandung der Bohrung eine Lagerungsfläche zur Aufnahme und Halterung der Siebplatte besitzt, wobei diese Lagerungsfläche vorzugsweise unter einem Winkel α''' zwischen 10° und 80°, insbesondere unter einem Winkel α''' zwischen 25° und 65°, relativ zur Strömungsrichtung des Fluids in der Bohrung angeordnet ist. Hierbei stützt sich an dieser Lagerungsfläche die Siebplatte, insbesondere eine kegelartige, kegelschnittartige oder kegelstumpfartige Siebplatte, ab, ohne daß es dabei aufgrund der auf die Siebplatte beim Filtrieren einwirkenden Kräfte zu einer unerwünschte radialen Ausweitung des Bolzens im Bereich der Bohrung kommt, obwohl hier die Materialstärke des Bolzens im Vergleich zu Bolzenbereichen, in denen keine Bohrung angeordnet ist, erheblich verringert ist.

Bei einer Weiterbildung der zuvor beschriebenen Ausführungsform ist die diesbezügliche Lagerungsfläche, die unter dem Winkel α''' angeordnet ist, als Ringfläche ausgebildet, so daß sich diese Ringfläche über den gesamten Innenumfang der Bohrung erstreckt.

Um bei einer derartigen Lagerungsfläche, die sich vorzugsweise radial nach innen in die Bohrung erstreckt, einen einwandfreien Durchfluß des zu filtrierenden Fluids, insbesondere des aufgeschmolzen Polymeren, sicherzustellen, bietet es sich insbesondere an, den Durchmesser der Bohrung im Bereich der Lagerfläche an seiner engsten Stelle vorzugsweise um 2 % bis 15 %, insbesondere um 5 % bis 10 %, bezogen auf den Bohrungsbereich unmittelbar vor der Siebplatte, zu verringern.

Eine besonders hohe Haltbarkeit der erfindungsgemäßen Fluidfiltervorrichtung wird dann bei einer solchen Ausführungsform sichergestellt, bei dem im Bereich der Lagerungsfläche zwischen der Bohrung und dem Außenmantel des Bolzens noch eine Materialstärke verbleibt, die 5 % bis 25 % der Materialstärke des Bolzens in einem Bereich entspricht, in dem keine Bohrung vorgesehen ist. Selbst bei den zuvor genannten relativ geringen Materialstärken genügt überraschenderweise noch die dann verbleibende Mantelstärke, um ein Verformen des Bolzens selbst bei extrem hohen Fluiddrücken zu verhindern.

Die zuvor beschriebenen Ausführungsformen der erfindungsgemäßen Fluidfiltervorrichtung werden vorzugsweise bei einem Kunststoffextruder verwendet, wobei die Fluidfiltervorrichtungen in Strömungsrichtung des aufgeschmolzenen Kunststoffes gesehen zwischen dem Extruder und einem Werkzeug angeordnet sind.

Der im vorliegenden Text verwendete Begriff Bohrung ist nicht nur auf solche Kanäle eingeschränkt, die bei der Herstellung entsprechend gebohrt werden sondern erstreckt sich auf alle Durchtrittsöffnungen, unabhängig von ihrer Herstellung, die im Bolzen angeordnet sind.

Vorteilhafte Weiterbildungen der erfindungsgemäßen Siebplatte sowie der erfindungsgemäßen Fluidfiltervorrichtung sind in den Unteransprüchen angegeben.

Die Erfindung wird nachfolgend anhand von verschiedenen Ausführungsbeispielen näher erläutert.

Es zeigen:
- Figur 1: eine schematische Schnittansicht einer Ausführungsform der Fluidfiltervorrichtung;
- Figur 2: eine schematische perspektivische Teilansicht einer ersten Ausführungsform der Siebplatte;
- Figur 3: die in Figur 2 schematisch abgebildete Ausführungsform der Siebplatte, jedoch im Schnitt im eingebauten Zustand;
- Figur 4: eine zweite Ausführungsform mit einer zweiten Siebplatte im Schnitt im eingebauten Zustand;
- Figur 5: eine dritte Ausführungsform mit einer dritten Siebplatte im Schnitt im eingebauten Zustand;
- Figur 6: eine vierte Ausführungsform mit einer vierten Siebplatte im Schnitt im eingebauten Zustand;
- Figur 7: eine fünfte Ausführungsform mit einer fünften Siebplatte im Schnitt im eingebauten Zustand;
- Figur 8: eine schematische Schnittansicht mit einer weiteren Fluidfiltervorrichtung;
- Figur 9 a: eine sechste Ausführungsform mit einer sechsten Siebplatte im Schnitt im eingebauten Zustand;

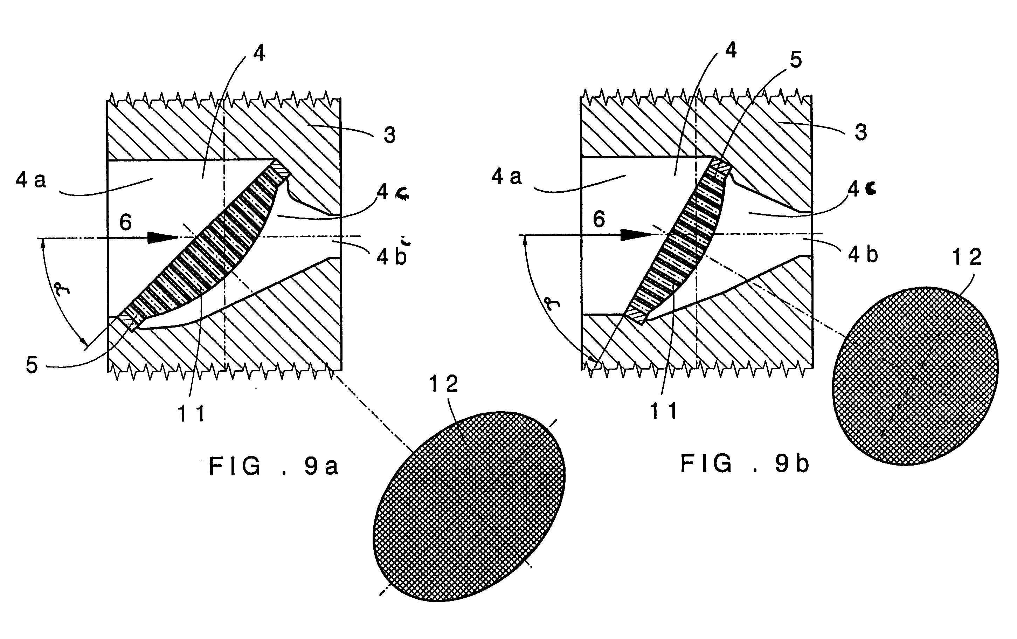

- Figur 9 b: eine siebte Ausführungsform mit einer siebten Siebplatte im Schnitt im eingebauten Zustand;

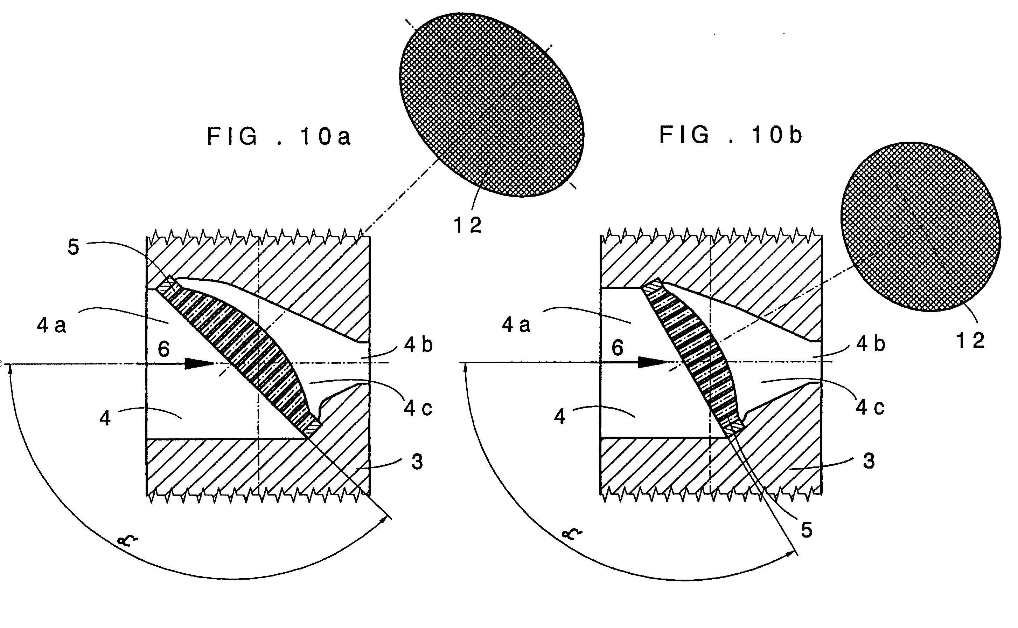

- Figur 10 a: eine achte Ausführungsform mit einer achten Siebplatte im Schnitt im eingebauten Zustand;
- Figur 10 b: eine neunte Ausführungsform mit einer neunten Siebplatte im Schnitt im eingebauten Zustand;

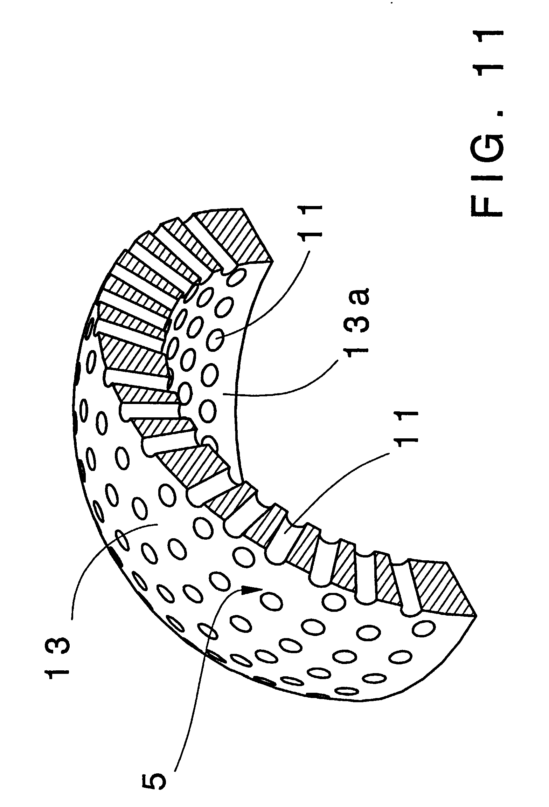

- Figur 11: eine perspektivische schematische Teilansicht einer zehnten Ausführungsform mit einer zehnten Siebplatte; und

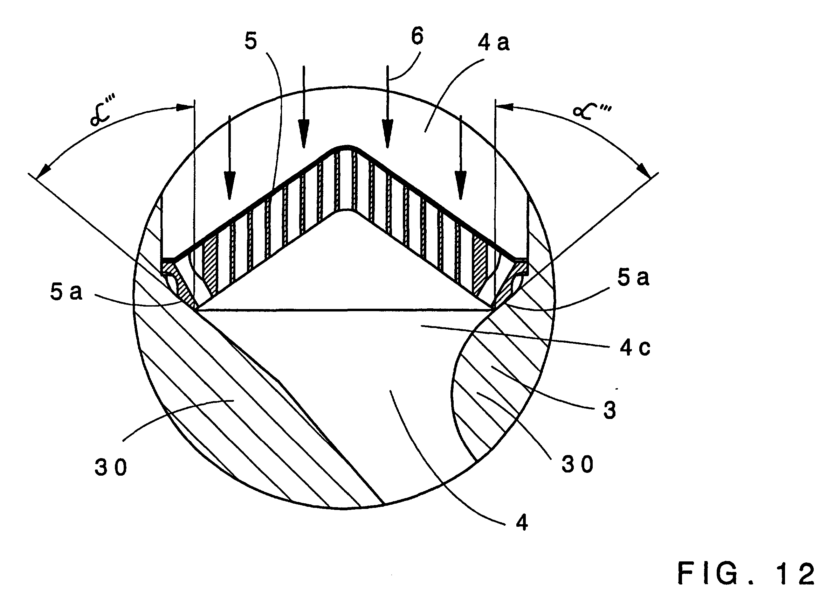

- Figur 12: eine schematische Teilansicht einer weiteren Ausführungsform mit einer kegelartigen Siebplatte.

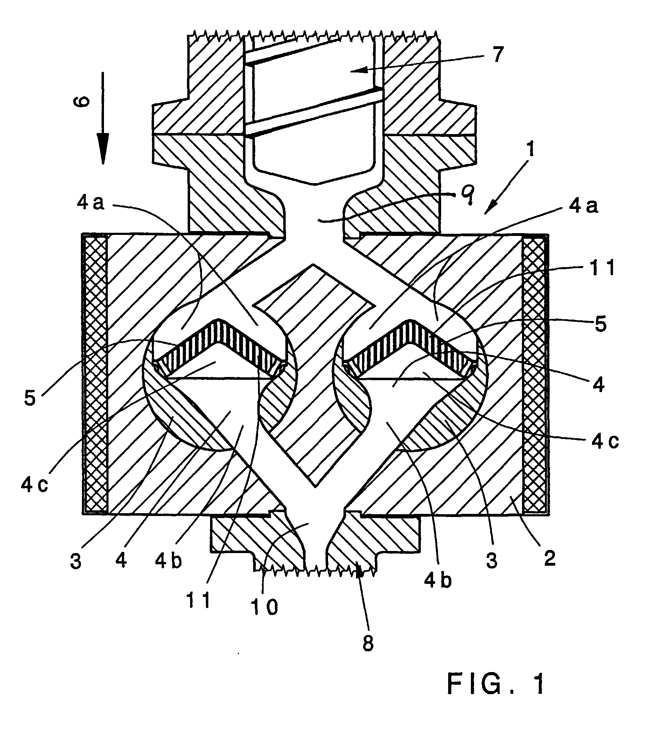

In den Figuren 1 bis 12 sind die selben Bauteilen mit den selben Bezugsziffern versehen.

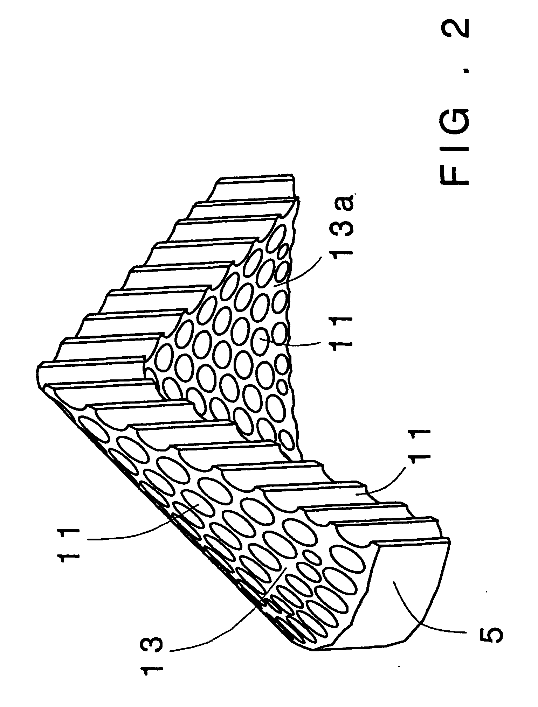

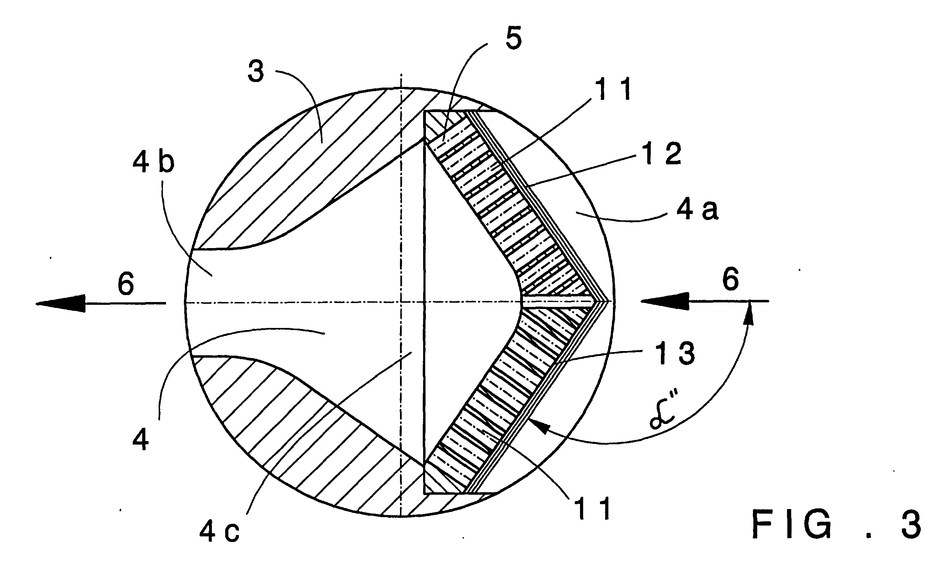

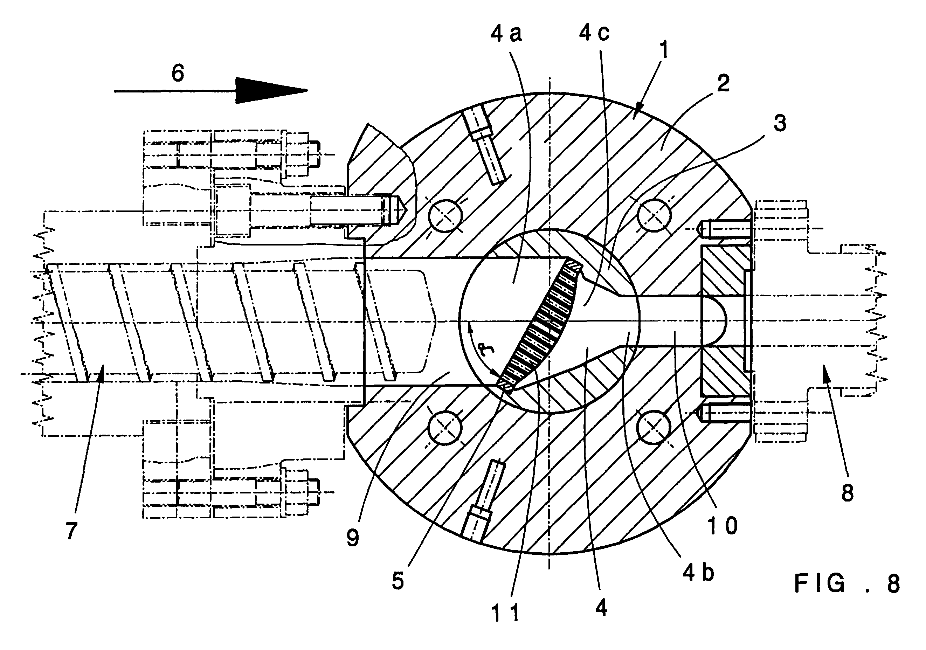

Anhand der Figuren 1 und 8 wird zunächst die insgesamt mit 1 bezeichnete Fluidfiltervorrichtung beschrieben, wobei die Fluidfiltervorrichtung 1 ein Gehäuse 2 aufweist. Innerhalb des Gehäuses 2 ist ein Bolzen 3 (Fig. 8) bzw. sind zwei Bolzen 3 (Fig. 1) vorgesehen, wobei die Bolzen 3 fluiddicht in einer entsprechenden Gehäusebohrung des Gehäuses 2 angeordnet sind. Die Bolzen 3 sind ferner axial verschiebbar, derart, daß die Bolzen 3 senkrecht zur Schnittebene nach oben und/oder unten verschiebbar sind. Durch eine derartige axiale Verschiebung der Bolzen 3 wird ermöglicht, daß jeweils eine insgesamt mit 4 bezeichnete Bohrung, die sich radial durch die gesamte Stärke der Bolzen 3 erstreckt, von außen zugänglich ist. Innerhalb der Bohrung 4 ist eine Siebplatte 5 angeordnet, wobei mehrere Ausführungsformen der Siebplatte 5 in den Figuren 2 bis 7 sowie 9 bis 12 gezeigt sind.

In den Figuren 1 und 8 gibt das Bezugszeichen 6 die Strömungsrichtung des zu filtrierenden Fluids an. Stromauf der Fluidfiltervorrichtung 1 ist zur Förderung des Fluids, bei dem es sich vorzugsweise um aufgeschmolzenen Kunststoff handelt, ein schematisch gezeigter Extruder 7 vorgesehen, während sich in Strömungsrichtung 6 des zu filtrierenden Fluids gesehen an die Fluidfiltervorrichtung 1 ein entsprechendes Werkzeug und/oder eine entsprechende Düse 8 anschließt.

Um die in jedem Bolzen 3 vorgesehene Bohrung 4 mit dem Extruder 7 bzw. dem Werkzeug und/oder der Düse 8 zu verbinden, weist das Gehäuse 2 der Fluidfiltervorrichtung einen Fluidzufuhrkanal 9 und einen Fluidabfuhrkanal 10 auf.

Die in jedem Bolzen 3 vorgesehene und insgesamt mit 4 bezeichnete Bohrung weist bei den Ausführungsformen gemäß der Figuren 1 und 8 einen ersten Bohrungsabschnitt 4 a auf. Dieser erste zylindrische Bohrungsabschnitt 4 a fluchtet beim Filtrieren des Fluids mit dem entsprechenden Fluidzufuhrkanal 9. An den ersten Bohrungsabschnitt 4 a schließt sich bei jedem Bolzen 3 in Strömungsrichtung 6 des Fluids gesehen die relativ zur Strömungsrichtung 6 des Fluids geneigt ausgebildete Siebplatte 5 an, wobei stromab der Siebplatte 5 einen trichterförmigen Bohrungsabschnitt 4 c vorgesehen ist. Dieser trichterförmige Bohrungsabschnitt 4 c mündet dann in den zylindrischen zweiten Bohrungsabschnitt 4 b, der wiederum mit dem Fluidabfuhrkanal 10 fluchtet.

Bei der in Figur 1 gezeigten Ausführungsform ist die Siebplatte 5, die in jedem Bolzen 3 angeordnet ist, kegelartig ausgestaltet, wobei die Kegelspitze entgegengesetzt zur Strömungsrichtung 6 des zu filtrierenden Fluids zeigt.

Wie unschwer der Figur 8 zu entnehmen ist, ist die Siebplatte 5 relativ zur Strömungsrichtung 6 des Fluids geneigt ausgebildet, wobei bei der gezeigten Ausführungsform der Neigungswinkel α einen Wert von etwa 65° einnimmt.

Die in den Figuren 1 und 8 gezeigte Siebplatte 5 dient jeweils zur Lagerung von mindestens einem, nicht gezeigten Filter, wobei das Filter stromauf der Siebplatte 5 angeordnet ist und an der Siebplatte 5 anliegt und dort abgestützt und gehaltert wird. Hierbei bewirkt dieses Filter, daß Schmutzpartikel bei einer Durchströmung der Anordnung Filter/Siebplatte von dem Filter zurückgehalten werden, so daß das Werkzeug 8 bzw. die Düse 8 einwandfrei und störungsfrei arbeiten kann. Um diese Zufuhr von gefiltertem Fluid zur Düse bzw. dem Werkzeug 8 zu ermöglichen, ist jede Siebplatte 5 mit einer Vielzahl von Durchtrittsöffnungen 11 versehen.

Die in den Figuren 1 und 8 gezeigten beiden Ausführungsformen der Fluidfiltervorrichtung 1 unterscheiden sich dahingehend, daß bei der in Figur 1 gezeigten Ausführungsform innerhalb von einem Gehäuse 2 zwei Bolzen 3 vorgesehen sind, während die in Figur 8 gezeigte Ausführungsform nur einen einzigen Bolzen 3 aufweist. Dementsprechend sind bei der in Figur 1 abgebildeten Ausführungsform mindestens zwei Filter in Betrieb, wobei das mindestens eine erste Filter von der linken Siebplatte und das mindestens zweite Filter von der rechten Siebplatte 5 gehaltert werden. Ist nunmehr die entsprechende Filterfläche mit Schmutzpartikeln beladen, so wird ein Bolzen axial verschoben, was dazu führt, daß die Siebplatte 5 und das hiervon gestützte Filter außerhalb des Gehäuses 2 gelangt, so daß es dementsprechend gereinigt und ausgetauscht wird, ohne daß dabei eine Unterbrechung der Zufuhr an filtriertem Fluid zum Werkzeug bzw. zur Düse 8 eintritt. Ebenso ist es möglich, das Gehäuse 2 derart auszugestalten, daß durch eine axiale Verschiebung des Bolzens 3 das jeweilige Filter zusammen mit der Siebplatte und der Bohrung in eine Spülstellung gebracht wird, wobei in dieser Spülstellung dann das entsprechende Filter von der Rückseite her gespült wird, so daß hiernach mit abgelöstem Schmutz beladenes Fluid zur Atmosphäre hin abführbar ist. Ein derartiges Rückspülen während des laufenden Filtrierprozesses ist beispielsweise ausführlich in der EP 0 672 443 A beschrieben und dort mit Rückspülstellung bezeichnet, so daß zur Vermeidung von Wiederholungen auf diese europäische Patentanmeldung verwiesen wird, die somit Inhalt der vorliegenden Offenbarung ist.

Wie am besten den Figuren 9 a, 9 b, 10 a und 10 b zu entnehmen ist, kann die Siebplatte 5 relativ zur Strömungsrichtung 6 des Fluids unter unterschiedlichen Neigungswinkeln angeordnet werden. Hierbei geben die Figuren 9 a, 9 b, 10 a und 10 b nur eine vergrößerte geschnittene Teilansicht des Bolzens 3 wieder, wobei der Bolzen 3 so angeordnet ist, wie dies zuvor anhand der Figuren 1 und 8 beschrieben ist.

In Figur 9 a ist eine Siebplatte 5 abgebildet, die in der Bohrung 4 so angeordnet ist, wie dies vorstehend anhand der Figuren 1 und 8 beschrieben ist. Hierbei ist die Siebplatte 5 relativ zur Strömungsrichtung 6 des Fluids unter einem Neigungswinkel α von 50° angeordnet, wobei die Neigung der Siebplatte 5 dazu führt, daß die entsprechende Siebfläche oval ausgebildet und dementsprechend im Vergleich zu der bekannten runden, senkrecht in der Bohrung 4 angeordneten Siebplatte eine entsprechend vergrößerte ovalförmige Siebfläche besitzt, wie dies durch die Draufsicht der Figur 9 a eines dort beispielhaft gezeichneten Filters 12 belegt wird.

Die in der Figur 9 b gezeigte Siebplatte 5 ist unter einem Neigungswinkel α von 65° relativ zur Strömungsrichtung 6 des Fluids in der Bohrung 4 angeordnet. Hierbei trägt aufgrund dieser Neigung die in Figur 9 b gezeigte Siebplatte auf ihrer Oberfläche ein Filter 12, das ebenfalls in Figur 9 b in der Draufsicht dargestellt ist und das die vorstehend bereits beschriebene ovale und vergrößerte Fläche aufweist.

Die in den Figuren 10 a und 10 b gezeigten Siebplatten unterscheiden sich von den zuvor anhand der Figuren 9 a und 9 b gezeigten und beschriebenen Siebplatten nur dahingehend, daß hierbei die in Figur 10 a abgebildete Siebplatte 5 unter einem Neigungswinkel α' von etwa 135° und die in der Figur 10 b abgebildete Siebplatte unter einem Neigungswinkel α' von 120°, jeweils zur Strömungsrichtung 6 des zu filtrierenden Fluids gesehen, in der Bohrung 4 des Siebbolzens 3 angeordnet ist. Diese geneigte Anordnung führt dazu, daß die entsprechend in den Figuren 10 a und 10 b in der Draufsicht gezeigten Filter 12 oval und entsprechend vergrößert ausgebildet sind, wie dies bereits zuvor für die Ausführungsformen gemäß der Figuren 9 a und 9 b beschrieben wurde.

Die nunmehr nachfolgend anhand der Figuren 2 bis 7 sowie 11 und 12 noch beschriebenen Ausführungsformen der Fluidfiltervorrichtung unterscheiden sich von den zuvor anhand der Figuren 8 bis 10 beschriebenen Ausführungsformen der Fluidfiltervorrichtung dahingehend, daß die in den Figuren 2 bis 7 sowie in den Figuren 11 und 12 gezeigten Ausführungsformen keine plattenförmig ausgestaltete sondern eine dreidimensional ausgebildete Siebplatte 5 aufweisen.

Wie am besten zunächst an der perspektivischen schematischen Schnittansicht der Figur 2 zu erkennen ist, ist die Siebplatte 5 gemäß der Figur 2 als Kegel ausgebildet, wobei die Mantelfläche 13 des Kegels 5 eine Vielzahl von Durchtrittsöffnungen 11 aufweist, von denen in Figur 2 nur drei mit der Ziffer 11 bezeichnet sind. Jede Durchtrittsöffnung 11 erstreckt sich durch die gesamte Materialstärke des Mantels der kegelartigen Siebplatte 5.

Wahlweise auf der äußeren Mantelfläche 13 und/oder auf der inneren Mantelfläche 13 a der kegelartigen Siebplatte 5 können dann das mindestens eine Filter bzw. die mindestens einen Filter angeordnet werden, wobei die äußere Mantelfläche 13 bzw. die innere Mantelfläche 13 a dieses bzw. diese Filter haltern, wie dies der in Figur 2 gezeigten Schnittansicht zu entnehmen ist.

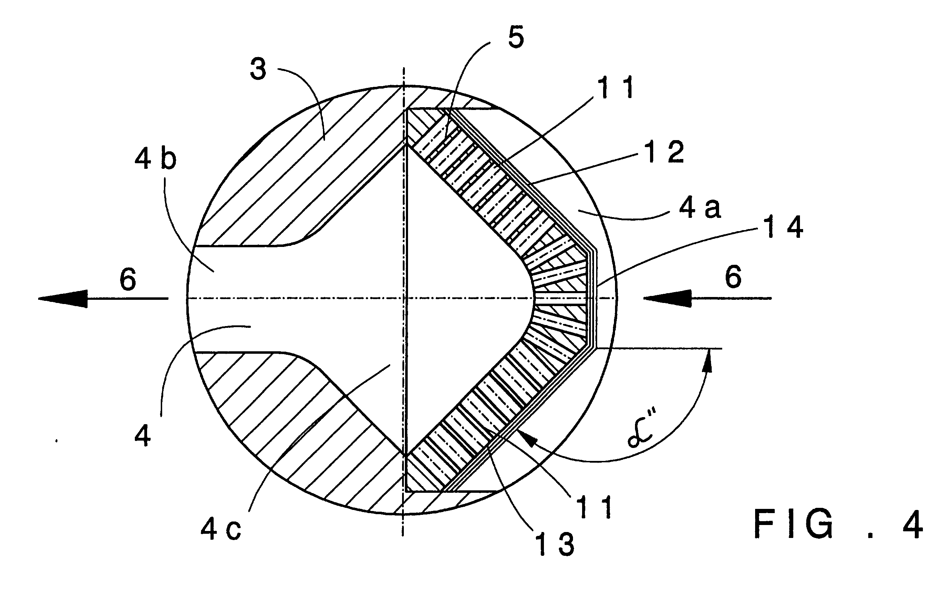

In den Figuren 3 bis 7 sind jeweils unterschiedlich ausgestaltete Siebplatten in einer solchen Schnittansicht wiedergegeben, wie diese zuvor für die Figuren 9 a, 9 b, 10 a und 10 b beschrieben sind. Mit anderen Worten geben die Figuren 3 bis 7 eine Detailschnittansicht der in den Figuren 1 und 8 gezeigten Bolzen 3 wieder, wobei jedoch in den Figuren 3 bis 7 jeweils unterschiedliche Ausgestaltungen der Siebplatte 5 abgebildet sind.

Wie bereits zuvor bei den Figuren 1 und 2 beschrieben, ist die in Figur 3 gezeigte Siebplatte 5 kegelförmig ausgebildet, wobei die Seitenlinien des Kegels unter einem Neigungswinkel α'' von etwa 130° zur Strömungsrichtung 6 des Fluids ausgerichtet ist. Auf dem äußeren Mantel 13 der Siebplatte 5 sind drei beispielhaft angeordnete Filter 12 vorgesehen, wobei die Filter 12 zur Abscheidung von unerwünschten Partikeln aus dem Fluid dienen. Desweiteren weist die Siebplatte 5 eine Vielzahl von Durchtrittsöffnungen 11 auf, die senkrecht zur Mantelfläche 13 verlaufen.

Das über den ersten Bohrungsabschnitt 4 a des Bolzens 3 in die Bohrung 4 in Pfeilrichtung 6 eintretende und zu filtrierende Fluid passiert zunächst die drei Filter 12, wodurch die unerwünschten Fremdpartikel abgeschieden werden. Über die Vielzahl der Durchtrittsöffnungen 11 gelangt dann das nunmehr filtrierte Fluid in den trichterförmigen Bohrungsabschnitt 4 c und von dort in den zweiten Bohrungsabschnitt 4 b und verläßt dann über einen nicht gezeigten Fluidabfuhrkanal, der in den Figuren 1 und 8 mit 10 bezeichnet ist, die Fluidfiltervorrichtung und gelangt von dort zu einem nicht gezeigten Werkzeug bzw. einer Düse, das bzw. die in den Figuren 1 und 8 mit dem Bezugszeichen 8 versehen ist.

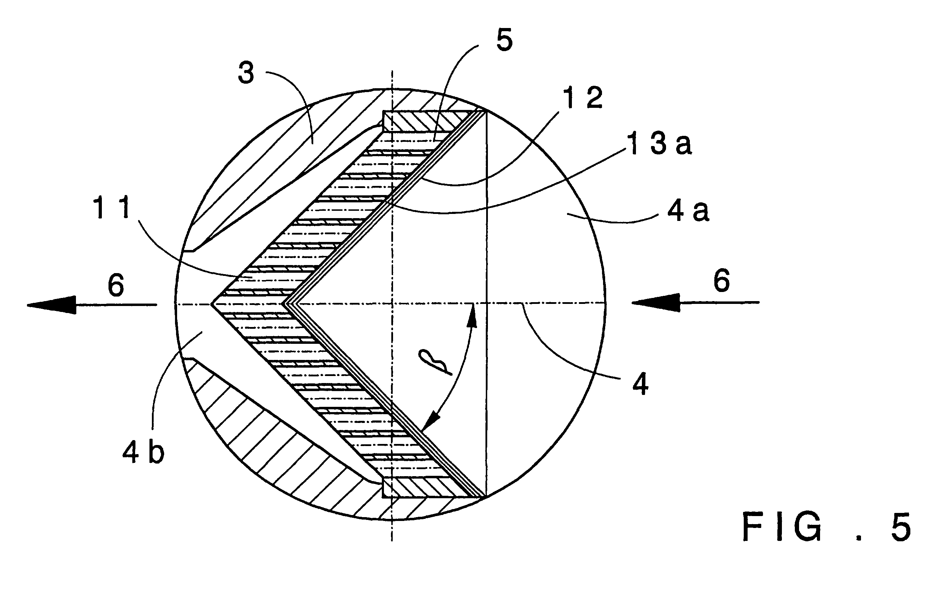

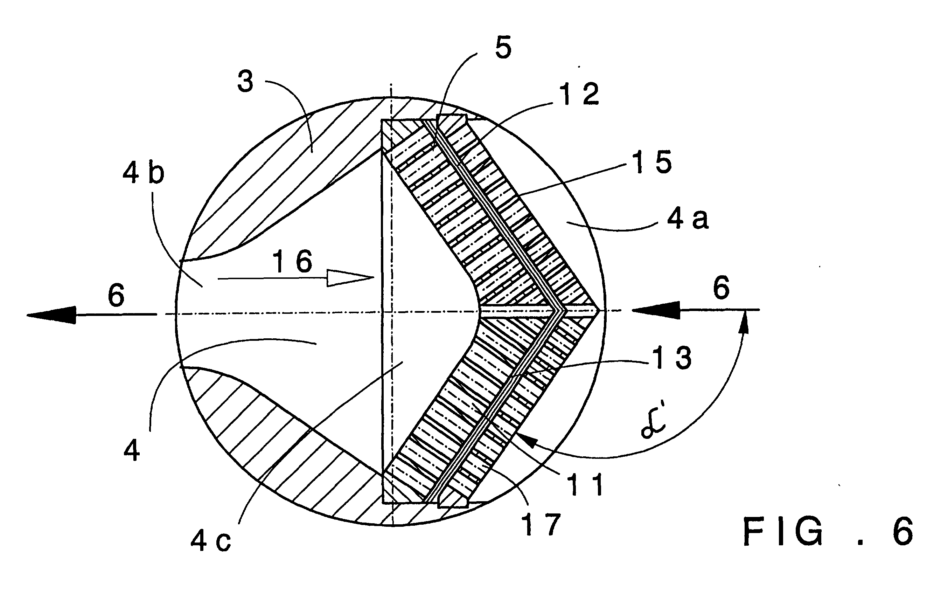

Die in Figur 4 gezeigte weitere Ausführungsform der Siebplatte 5 unterscheidet sich von der zuvor anhand der Figur 3 beschriebenen Ausführungsform der Siebplatte 5 dahingehend, daß hierbei die Siebplatte 5 nicht als kegelartige Siebplatte (siehe Figur 3) sondern als kegelstumpfartige Siebplatte ausgebildet ist, wobei die Deckfläche 14 der kegelstumpfartigen Siebplatte entgegengesetzt und somit senkrecht zur Fluidströmungsrichtung 6 ausgerichtet ist. Die Mantelflächen 13 der in Figur 4 gezeigten Siebplatte 5 sind unter dem selben Neigungswinkel α'' zur Fluidströmungsrichtung 6 ausgerichtet, wie dies zuvor für die Ausführungsform gemäß Figur 3 beschrieben ist.

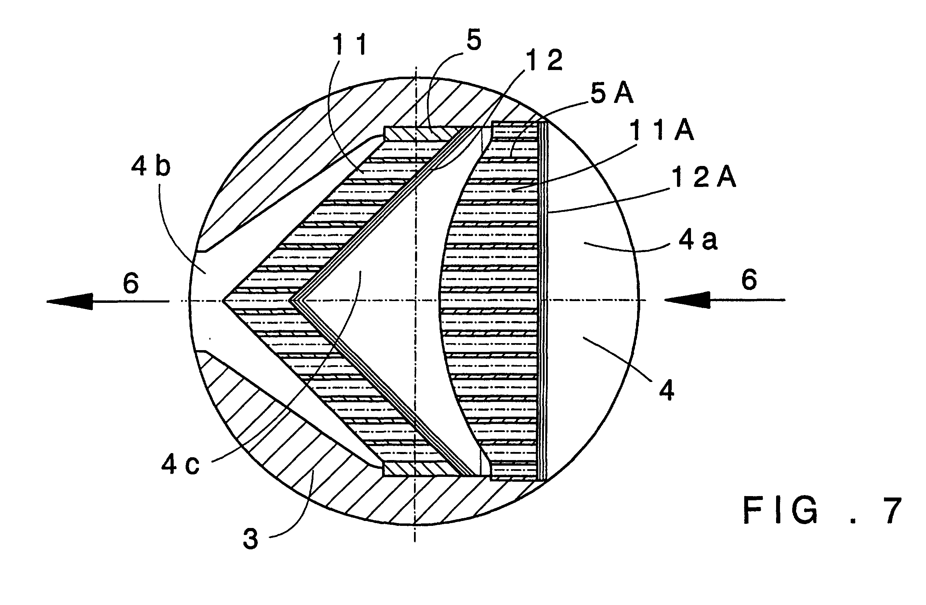

Die in der Figur 5 gezeigte dritte Ausführungsform der Siebplatte 5 unterscheidet sich von den zuvor beschriebenen und in den Figuren 2 bis 4 gezeigten Ausführungsformen dahingehend, daß hierbei die drei beispielhaft abgebildeten Filter 12 am Innenmantel 13 a der kegelartig gestalteten Siebplatte 5 anliegen. Mit anderen Worten erstrecken sich somit bei dieser Ausführungsform gemäß der Figur 5 die Seitenlinien der kegelartigen Siebplatte 5 unter einem Neigungswinkel β von 45° zur Strömungsrichtung 6 des Fluids, was zur Folge hat, daß dementsprechend die Kegelspitze in Strömungsrichtung 6 des zu filtrierenden Fluids weist. Desweiteren sind die Durchtrittsöffnungen 11 der Siebplatte 5 parallel zur Strömungsrichtung 6 des Fluids ausgerichtet.

Insgesamt gesehen ist die Siebplatte 5 in einer Bohrung 4, die sich durch einen Bolzen 3 erstreckt, angeordnet, wobei der Bolzen 3 und die Bohrung 4 so ausgebildet sind, wie dies in den Figuren 1 und 8 gezeigt und vorstehend beschrieben ist.

Die in Figur 6 gezeigte vierte Ausführungsform der Siebplatte 5 unterscheidet sich von der in den Figuren 2 und 3 gezeigten ersten Ausführungsform der Siebplatte 5 dahingehend, daß in Strömungsrichtung 6 des zu filtrierenden Fluids gesehen zunächst eine Stützplatte 15, hierauf folgend drei, beispielhaft gezeigte Filter 12 und im Anschluß hieran dann die eigentliche Siebplatte 5 angeordnet ist. Die Stützplatte 15 ist mit einer Vielzahl von Durchtrittskanälen 17 versehen, wobei die Durchtrittskanäle 17 mit den in der Siebplatte 5 vorgesehenen Durchtrittsöffnungen 11 fluchten. Somit gelangt das zu filtrierende Fluid zunächst über die Durchflußkanäle 17 zu den Filtern 12 und durchströmt hiernach die Durchtrittsöffnungen 11, um so über den trichterförmigen Bohrungsabschnitt 4 c und den zylindrischen Bohrungsabschnitt 4 b und den Fluidabfuhrkanal 10 zu einem Werkzeug bzw. einer Düse 8 zu gelangen, wie dieses bzw. diese in den Figuren 1 und 8 gezeigt ist.

Stellt sich im Laufe des Betriebes dann eine Beladung der Filter 12 mit Schmutzpartikeln ein, so daß eine Regenerierung der Filter 12 erforderlich wird, können die Filter 12 durch Umkehrung der Strömungsrichtung des Fluids in Pfeilrichtung 16 durchströmt werden, so daß hierdurch die Schmutzpartikel abgelöst und die Filter 12 regeneriert werden. Für dieses Rückspülen, d.h. das Durchströmen der Filter 12 in Pfeilrichtung 16, wird bereits filtriertes Fluid verwendet, wobei die Filter 12 in dieser Betriebsweise dann durch die Stützplatte 15 gehaltert werden.

Nach erfolgtem Regenerieren (Rückspülen) erfolgt dann eine erneute Umkehr der Fluidströmungsrichtung, d.h. das zu filtrierende Fluid strömt wieder in Pfeilrichtung 6, wobei in diesem Betriebszustand dann die Filter 12 durch die kegelartige Siebplatte 5 fixiert und gehaltert werden.

Ebenso ist es möglich, die zuvor beschriebene und mit unterschiedlichen Siebplatten ausgestaltete Fluidfiltervorrichtung so auszubilden, daß zum Reinigen des Filters bzw. der Filter der relativ zum Gehäuse 2 (Figuren 1 und 8) axial verschiebbare Bolzen 3 so weit verschoben wird, daß die entsprechende Siebplatte und das hiervon gehalterte Filter frei zugänglich ist, so daß es dementsprechend gereinigt oder durch ein nicht beladenes Filter ausgetauscht werden kann.

Die in Figur 7 gezeigte fünfte Ausführungsform der insgesamt mit 5 und 5 A bezeichnete Siebplatte unterscheidet sich von der zuvor beschriebenen dritten Ausführungsform (Figur 5) dahingehend, daß bei der fünften Ausführungsform zusätzlich zu der kegelartigen Siebplatte 5 eine weitere Siebplatte 5 A vorgesehen ist, wobei die weitere Siebplatte 5 A vollständig die Grundfläche der kegelartigen Siebplatte 5 abdeckt. Hierbei ist die weitere Siebplatte 5 A stromauf der Siebplatte 5 angeordnet. Von der Außenfläche der Siebplatte 5 A werden drei, nur beispielhaft gezeigte Filter 12 A gehaltert, wobei die Siebplatte 5 A mit einer Vielzahl von weiteren Durchtrittsöffnungen 11 A versehen ist.

Die Durchmesser der weiteren Durchtrittsöffnungen 11 A sind im Vergleich zu den Durchmessern der Durchtrittsöffnungen 11 größer ausgestaltet, wobei die Filter 12 A im Vergleich zu den Filtern 12 ebenfalls grobmaschiger ausgebildet sind.

Durchströmt nunmehr das zu filtrierende Fluid in Pfeilrichtung 6 die Filter 12 A und die Siebplatte 5 A, so werden von den Filtern 12 A zunächst die gröberen Partikel, die aus dem Fluid herauszufiltrieren sind, entfernt.

Feinere und Feinstpartikel werden durch die Filter 12, die am Innenmantel der Siebplatte 5 anliegen, abgeschieden, wobei die in Figur 7 gezeigte Ausführungsform den Vorteil aufweist, daß sie eine besonders lange Standzeit besitzt, bevor ein Austausch der Filter 12 A und 12 erforderlich wird.

Um diesen Austausch zu erleichtern, ist die in Figur 7 gezeigte fünfte Ausführungsform der Filteranordnung, bestehend aus zwei Siebplatten 5 und 5 A sowie zwei Filtersätzen 12 und 12 A, zweistückig ausgebildet, so daß die Siebplatte 5 A mit den zugehörigen Filtern 12 A und die Siebplatte 5 mit den zugehörigen Filtern 12 unabhängig voneinander ausgewechselt werden kann, wenn der Siebbolzen 3 durch eine axiale Verschiebung in eine Stellung überführt wurde, in der die Filter bzw. Siebplatten von außen zugänglich sind, wie dies vorstehend für die in den Figuren 1 und 8 gezeigten Siebbolzen 3 beschrieben ist.

Sind die in Figur 7 gezeigte Bohrung 4 und der Bolzen 3 entsprechend dimensioniert, besteht selbstverständlich auch die Möglichkeit, die Siebplatte 5 A als geneigte Siebplatte auszubilden, wie diese zuvor in den Figuren 9 a, 9 b, 10 a und 10 b gezeigt und beschrieben ist. Ebenso kann bei einer entsprechenden Dimensionierung des Bolzens 3 und des Kanals 4 die Siebplatte 5 A so gestaltet sein, wie dies vorstehend für die Figuren 2 bis 6 beschrieben ist oder nachstehend anhand der Figur 11 noch beschrieben wird.

Die Figur 11 bildet schematisch und perspektivisch eine Teilschnittansicht einer weiteren Ausführungsform der Fluidfiltervorrichtung mit einer Siebplatte 5 ab, wobei bei der in Figur 11 gezeigten Ausführungsform die Siebplatte 5 als Halbkugel ausgestaltet ist. Hierbei weist diese halbkugelförmige Siebplatte 5 eine Vielzahl von Durchtrittsöffnungen 11 auf, wobei in der Figur 11 nur zwei beispielhaft gezeigt sind. Je nachdem, wie die halbkugelförmige Siebplatte 5 im Strömungsweg des zu filtrierenden Fluids angeordnet ist, d.h. ob die halbkugelförmige Siebplatte 5 von innen nach außen oder von außen nach innen durchströmt wird, dient die innere Mantelfläche 13 a oder die äußere Mantelfläche 13 als Stützfläche für mindestens ein hieran anliegenden Filter. Die Durchtrittsöffnungen 11 erstrecken sich bei der in Figur 11 gezeigten Ausführungsform überwiegend senkrecht zur Mantelfläche 13 bzw. 13 a der halbkugelförmigen Siebplatte 5.

Die in Figur 12 gezeigte Ausführungsform der Fluidfiltervorrichtung weist ebenfalls eine kegelartige Siebplatte 5 auf, wobei die kegelartige Siebplatte 5 in einer Bohrung 4 eines Bolzens 3 angeordnet ist. Hierbei besteht die insgesamt mit 4 bezeichnete Bohrung einen ersten zylindrischen Bohrungsabschnitt 4 a auf, wobei stromab der Siebplatte 5 (in Strömungsrichtung 6 des zu filtrierenden Fluids gesehen) ein trichterförmiger Bohrungsabschnitt 4 c anschließt. Obwohl im Bereich der Bohrung nur noch eine relativ geringe Materialstärke des Bolzens, die in Figur 12 mit 30 bezeichnet ist, stehengeblieben ist, tritt bei der in Figur 12 gezeigten Ausführungsform keine unerwünschte Verformung des Bolzens in diesem Bereich auf. Als wesentlicher Grund hierfür ist anzusehen, daß die Siebplatte 5 eine ringförmige Lagerfläche 5 a aufweist, wobei diese ringförmige Lagerfläche 5 a unter einem Winkel α''' zur Strömungsrichtung des Fluids 6 angeordnet ist. Die Größe dieses Winkels α''' kann zwischen 10° und 80°, vorzugsweise zwischen 25° und 60°, variieren, wobei im konkret gezeigten Ausführungsbeispiel gemäß der Figur 12 dieser Winkel α''' etwa 50° beträgt.

Wie die zuvor beschriebenen Ausführungsformen der erfindungsgemäßen Fluidfiltervorrichtung, insbesondere die in den Figuren 2 bis 7 sowie 11 und 12 beschriebenen Ausführungsformen, zeigen, ist es durch die Ausgestaltung der Siebplatte als Kegel, Kegelschnitt oder Kegelstumpf sowie als Kugel, Kugelabschnitt oder Kugelschicht möglich, die Dicke der Siebplatte über ihre gesamte Fläche konstant zu halten. Dies hat den Vorteil, daß die Durchtrittsöffnungen eine identische Länge aufweisen, so daß dementsprechend hierdurch die Strömung des Fluids optimiert wird.

## Patentansprüche

1. Fluidfiltervorrichtung mit einer Siebplatte zur Halterung und/oder Abstützung von mindestens einem Filter, wobei die Siebplatte eine Vielzahl von Durchtrittsöffnungen aufweist, die sich von der Frontseite der Siebplatte zu der Rückseite derselben erstrecken und die Siebplatte in einer Bohrung eines Bolzens, der fluiddicht in einem Gehäuse der Fluidfiltervorrichtung vorgesehen ist, angeordnet ist, und wobei sich die Bohrung radial durch den Bolzen unter Ausbildung einer Fluidverbindung zwischen einem Fluidzufuhrkanal und einem Fluidabfuhrkanal erstreckt und der Bolzen relativ zur Strömungsrichtung des Fluids im Fluidzufuhrkanal bzw. Fluidabfuhrkanal axial verschiebbar ist, derart, daß in einer ersten Stellung des Bolzens der Fluidzufuhrkanal mit dem Fluidabfuhrkanal über die mit beiden Kanälen fluchtende Bohrung verbunden ist, während in der zweiten Stellung des Bolzens die Bohrung nicht mit den beiden Kanälen fluchtet und somit kein Fluid vom Fluidzufuhrkanal zum Fluidabfuhrkanal fließt, dadurch gekennzeichnet, daß die Siebplatte (5) und das mindestens eine, an der Siebplatte (5) anliegende und hiervon gehalterte und abgestützte Filter (12) relativ zur Strömungsrichtung (6) des Fluids in der Bohrung (4 a, 4 b) gesehen geneigt ausgebildet sind.

2. Vorrichtung nach Anspruch 1, dadurch gekennzeichnet, daß die Siebplatte (5) und das Filter (12) relativ zur Strömungsrichtung (6) des Fluids gesehen unter einem Neigungswinkel α zwischen 10° und 80°, vorzugsweise unter einem Neigungswinkel α zwischen 35° und 55°, angeordnet sind.

3. Vorrichtung nach Anspruch 1 oder 2, dadurch gekennzeichnet, daß die Siebplatte (5) und das Filter (12) relativ zur Strömungsrichtung (6) des Fluids gesehen unter einem Neigungswinkel α' zwischen 100° und 170°, vorzugsweise unter einem Neigungswinkel α' zwischen 125° und 145°, angeordnet sind.

4. Vorrichtung nach einem der vorangehenden Ansprüche, dadurch gekennzeichnet, daß die Siebplatte (5) und das Filter (12) als Kugelabschnitt oder als Kugelschicht, vorzugsweise als Halbkugel, ausgebildet sind, wobei die Mantelfläche (13, 13 a) des Kugelabschnittes bzw. der Kugelschicht bzw. der Halbkugel mit der Vielzahl der Durchtrittsöffnungen (11; 11 A) versehen ist.

5. Vorrichtung nach einem der Ansprüche 1 bis 3, dadurch gekennzeichnet, daß die Siebplatte (5) und das Filter (12) die Form eines Kegels, eines Kegelschnittes oder eines Kegelstumpfes aufweist, wobei die Mantelfläche (13; 13 A) des Kegels, des Kegelschnittes oder des Kegelstumpfes mit der Vielzahl der Durchtrittsöffnungen (11) versehen ist.

6. Vorrichtung nach Anspruch 5, dadurch gekennzeichnet, daß die Durchtrittsöffnungen (11) über die gesamte Mantelfläche (13; 13 A) des Kegels, des Kegelschnittes oder des Kegelstumpfes verteilt sind.

7. Vorrichtung nach Anspruch 5 oder 6, dadurch gekennzeichnet, daß die Siebplatte (5) und das Filter (12) derart in der Bohrung (4 a, 4 b) angeordnet sind, daß die Spitze des Kegels, die Schnittfläche des Kegels oder die Deckfläche (14) des Kegelstumpfes entgegengesetzt zur Strömungsrichtung (6) des zu filtrierenden Fluids weist.

8. Vorrichtung nach Anspruch 5, 6 oder 7, dadurch gekennzeichnet, daß auch die Schnittfläche des Kegels oder die Deckfläche (14) des Kegelstumpfes mit Durchtrittsöffnungen (11) versehen ist.

9. Vorrichtung nach einem der Ansprüche 5 bis 8, dadurch gekennzeichnet, daß die Seitenlinie des Kegels, des Kegelschnittes oder des Kegelstumpfes relativ zur Strömungsrichtung (6) des Fluids in der Bohrung (4 a, 4 b) unter einem Winkel α'' zwischen 100° und 170°, vorzugsweise unter einem Winkel α'' zwischen 120° und 150°, oder unter einem Winkel β zwischen 10° und 80°, vorzugsweise unter einem Winkel β zwischen 30° und 60°, angeordnet ist.

10. Vorrichtung nach einem der Ansprüche 5 bis 9, dadurch gekennzeichnet, daß die Grundfläche des Kegels oder des Kegelschnittes oder des Kegelstumpfes ebenfalls als Siebplatte (5 A) ausgestaltet ist, wobei die Grundfläche (5 A) mindestens ein Filter haltert und abstützt und eine Vielzahl von weiteren Durchtrittsöffnungen (11 A) aufweist.

11. Vorrichtung nach Anspruch 10, dadurch gekennzeichnet, daß die Grundfläche des Kegels, des Kegelschnittes oder des Kegelstumpfes eine Vielzanl von weiteren Durchtrittsöffnungen (11 A) aufweist, wobei der Durchmesser der weiteren Durchtrittsöffnungen (11 A) größer ist als der Durchmesser der in der Mantelfläche (13, 13 a) vorgesehenen Durchtrittsöffnungen (11).

12. Vorrichtung nach einem der vorangehenden Ansprüche, dadurch gekennzeichnet, daß die Summe der Grundflächen aller Durchtrittsöffnungen (11; 11 A) 50 % bis 80 % der Gesamtfläche der Siebplatte (5; 5 A) ausmacht.

13. Vorrichtung nach einem der Ansprüche 5 bis 12, dadurch gekennzeichnet, daß die Siebplatte (5) eine kegelstumpfartige Form aufweist und daß die Fläche des Deckkreises (14) und/oder die Mantelfläche (13, 13 a) mit einer Vielzahl von im Wesentlichen in Strömungsrichtung verlaufenden Durchtrittsöffnungen (11) versehen ist.

14. Vorrichtung nach einem der Ansprüche 5 bis 12, dadurch gekennzeichnet, daß die Mantelfläche (13, 13 a) des Kegelstumpfes, des Kegelschnittes oder des Kegels mit einer Vielzahl von Durchtrittsöffnungen (11) versehen ist, wobei die Durchtrittsöffnungen (11) im Wesentlichen senkrecht zur Mantelfläche (13, 13 a) ausgerichtet sind.

15. Vorrichtung nach einem der vorangehenden Ansprüche, dadurch gekennzeichnet, daß in Fluidströmungsrichtung (6) gesehen die im Bolzen (3) angeordnete Bohrung (4) einen ersten Bohrungsabschnitt (4 a) und einen sich hieran anschließenden zweiten Bohrungsahscbnitt (4 b) aufweist, wobei der erste Bohrvngsabschnitt (4 a) einen größeren Durchmesser besitzt als der zweite Bohrungsabschnitt (4 b).

16. Vorrichtung nach Anspruch 15, dadurch gekennzeichnet, daß der erste und/oder der zweite Bohrungsabschnitt (4 a, 4 b) einen zylindrischen Querschnitt aufweist.

17. Vorrichtung nach Anspruch 15, dadurch gekennzeichnet, daß der zweite Bohrungsabschnitt (4 b) in Fluidströmungsrichtung (6) gesehen zunächst ein trichterförmiger Bohrungsabschnitt (4 c) und hieran anschließend den zylindrischen zweiten Bohrungsabschnitt (4 b) aufweist.

18. Vorrichtung nach Anspruch 16 oder 17, dadurch gekennzeichnet, daß der zylindrische zweite Bohrungsabschnitt (4 b) in seinem Durchmesser dem Durchmesser des Fluidabfuhrkanals (10) entspricht.

19. Vorrichtung nach einem der vorangehenden Ansprüche, dadurch gekennzeichnet, daß der Siebplatte (5) eine Stützplatte (15) zugeordnet ist, wobei die Stützplatte (15) in ihrer Form der Siebplatte (5) angepaßt ist und eine Vielzahl von Durchtrittskanälen (11) aufweist, und daß zwischen der Siebplatte (5) und der Stützplatte (15) das mindestens eine Filter (12) angeordnet ist.

20. Vorrichtung nach Anspruch 19, dadurch gekennzeichnet, daß die Durchtrittskanäle (17) in der Stützplatte (15) mit den Durchtrittsöffnungen (11, 11 A) in der Siebplatte (5) fluchten.

21. Vorrichtung nach einem der vorangehenden Ansprüche, dadurch gekennzeichnet, daß die Innenwandung der Bohrung (4 a, 4 b) eine Lagerungsfläche zur Aufnahme und Halterung der Siebplatte (5) aufweist, wobei die Lagerungsfläche unter einem Winkel α''' zwischen 10° und 80°, vorzugsweise zwischen 25° und 65°, relativ zur Strömungsrichtung des Fluids in der Bohrung (4 a; 4 b) angeordnet ist.

22. Vorrichtung nach Anspruch 21, dadurch gekennzeichnet, daß die Lagerungsflache als Ringfläche, die sich über den gesamten Innenumfang der Bohrung (4 a, 4 b) erstreckt, ausgebildet ist.

23. Vorrichtung nach Anspruch 21 oder 22, dadurch gekennzeichnet, daß sich die Lagerungsfläche radial nach innen in die Bohrung (4 a; 4 b) erstreckt, wobei der Durchmesser der Bohrung im Bereich der Lagerflache an der engsten Stelle um 2 % bis 15 %, vorzugsweise um 5 % bis 10 %, verringert ist.

24. Vorrichtung nach einem der Ansprüche 21 bis 23, dadurch gekennzeichnet, daß die im Bereich der Lagerungsfläche zwischen Bohrung (4 a; 4 b) und Außenmantel des Bolzens ( ) verbleibende Materialstärke 5 % bis 25 % der Materialstärke des Bolzens in einem Bereich, in dem keine Bohrung vorgesehen ist, ausmacht.

25. Verwendung der Fluidfiltervorrichtung nach einem der Ansprüche 1 bis 24 bei einem Kunststoffextruder (7), wobei die Fluidfiltervorrichtung (1) in Strömungsrichtung (6) des aufgeschmolzenen Kunststoffes gesehen zwischen dem Extruder (7) und einem Werkzeug (8) angeordnet ist.
